# EUROPEAN PATENT SPECIFICATION

(11) **EP 0 933 966 B1**
(45) Date of publication and mention of the grant of the patent: **28.09.2005**
(21) Application number: 98400197.4
(22) Date of filing: 30.01.1998
(51) Int. Cl.: H04Q 11/04, H04L 29/06

(54) **A method to route Internet data packets, an access node and a terminal realizing such a method and a communication network**
Verfahren zur Leitweglenkung von Internetdatenpaketen: Zugriffsknoten, Endgerät und Kommunikationsnetz zur Durchführung des Verfahrens
Procédé d'acheminement de paquets de données Internet; noeud d'accès, terminal et réseau de communication permettant d'implémenter le procédé

(43) Date of publication of application: 04.08.1999
(73) Proprietor: ALCATEL, 75008 Paris (FR)
(72) Inventor: Verougstraete, Benoît Louis Joseph Marie, 1330 Rixensart (BE)
(74) Representative: Narmon, Gisèle Marie Thérèse

(56) References cited:
- TAO J ET AL: "INTERNET ACCESS VIA BASEBAND AND BROADBAND ISDN GATEWAYS" PROCEEDINGS OF THE ANNUAL INTERNATIONAL PHOENIX CONFERENCE ON COMPUTERS AND COMMUNICATIONS, PHOENIX, APR. 12 - 15, 1994, no. CONF. 13, 12 April 1994, pages 485-490, XP000462600 INSTITUTE OF ELECTRICAL AND ELECTRONICS ENGINEERS
- BALTZ S ET AL: "SYSTEMS FOR SMALL AND MEDIUM BUSINESSES: THE TREND TOWARDS APPLICATIONS" ALCATEL TELECOMMUNICATIONS REVIEW, 1 October 1996, pages 265-274, XP000681899
- HIRSCH C ET AL: "Internal communications in a multiprocessor ISDN PBX" COMPUTER COMMUNICATIONS, vol. 18, no. 5, May 1995, page 392-396 XP004032486

## Description

The present invention relates to a method to route internet data packets as described in the preamble of claim 1, an access node and a terminal to realize such a method as described in the preamble of claim 6, respectively, and a communication network including such an access node as described in the preamble of claim 8.

A method to route internet data packets in a communication network is common knowledge. Indeed, a communication network where e.g. internet data packets are routed between a terminal of a user and an internet service provider, the terminal is coupled via an access node to a local exchange which on its turn is coupled to a central office which includes in general a packet handler to route the internet traffic from the terminal towards the internet service provider.

Such a communication network is traditionally dimensioned for voice traffic with a rather short duration time being compared with the average duration of an internet connection. Due to these long duration internet calls, the local exchange and the central office become congested whereby even usual telephone calls are not possible anymore.

A possible method to solve this congestion problem of the telephone network is to recognize calls to internet service providers by recognizing internet server provider numbers by the access node and to handle these internet calls differently from voice calls. The recognized internet calls are routed by the access node not through the public switched network i.e. not to the local exchange, but via a dial-up data switch to the different internet service providers. Since the internet traffic is intercepted before arrival at the local exchange, the local exchange is released of those resource consuming calls. This solution is used by the Access Node Data Direct from Northern Telecom which is described on the internet web site from Nortel which describes the product portfolio of Nortel and which was made available to the public on 21 of October 1997 at the address *http:*//*www.nortel.com*/*broadband*/*access*/*datadirect.html*.

A person skilled in the art knows that a possible way to recognize an internet service provider number is to control the telephone number of a desired connection upon its presence within a list of internet service provider numbers. However, due to a growing number of internet service providers, the list of internet service providers becomes a long list and controlling such a long list becomes a burden to the access node.

An object of the present invention is to provide a method to route internet data packets, an access node and a terminal of a user realizing such a method and a communication network including such an access node or such a terminal of the above known type, which releases the telephone network of the resource consuming internet calls, but wherein no list of internet service provider numbers has to be checked by the access node.

According to the invention, this object is achieved by means of the method to route internet data packets described in claim 1, the access node described in claim 6 and the communication network described in claim 8.

The present invention addresses this problem by providing a method to route internet data packets which includes the steps of transferring the internet data packets by the terminal to the access node via a predefined signaling-data channel of a predefined transport service being supported by a first link between the terminal and the access node, retrieving by a routing function means of the access node a value of a pre-configured user parameter which is set following the user's preferences and configuring an input user port of the access node accordingly and grooming the internet data packets from the predefined signaling-data channel upon receipt of the internet data packets by the access node, and transferring by the access node the internet data packets via a second link supporting a primary rate access transport service towards the internet service provider.

Accordingly, the basic idea of the present invention is to use for the internet data packets a predefined signaling-data channel from the terminal of the user up to the access node, to groom the internet data packets by the access node from the predefined signaling-data channel i.e. to separate the internet data packets from the signaling information and to prepare the internet data packets in order to be multiplexed and to be transferred via a second link supporting a primary rate access transport service towards the internet service provider. In this way, the internet traffic is not routed to the local exchange whereby congestion due to the time consuming internet traffic is avoided and no list of internet service providers has to be checked by the access node.

It has to be remarked that for a transport service like e.g. integrated services digital networks, called hereafter ISDN, the use of the signaling-data channel i.e. the D channel of ISDN, to carry data on top of its signaling functions from the terminal up to the local exchange is known in the art. More specific, such a D channel can be used to access a public packet switching network whereby the local exchange is equipped to separate that part of the D channel which is carrying signaling information from that part of the D channel which is passed through the local exchange to a packet switching network. This is e.g. described in the quarterly technical journal of Alcatel nv., *Electrical Communication, Volume 64 number 1 of 1990 and published in July of 1990, and more particular on page 69, second paragraph of the first column.* However, by using the D channel of ISDN for transferring the internet data packets, the telephone network is still congested up to the first packet handler. In this context document XP000462600 discloses an ISDN-to-Internet gateway using inter alia the ISDN D-channel packet switching capability for applications other than signaling (page 487, chapter 2.6, lines (30-45).

It should be noticed that the term "including", used in the claims, should not be interpreted as being limitative to the means listed thereafter. Thus, the scope of the expression "a device including means A and B" should not be limited to devices consisting only of components A and B. It means that with respect to the present invention, the only relevant components of the device are A and B.

Similarly, it is to be noted that the term "coupled", also used in the claims, should not be interpreted as being limitative to direct connections only. Thus, the scope of the expression "a device A coupled to a device B" should not be limited to devices or systems wherein an output of device A is directly connected to an input of device B. It means that there exists a path between an output of A and an input of B which may be a path including other devices or means.

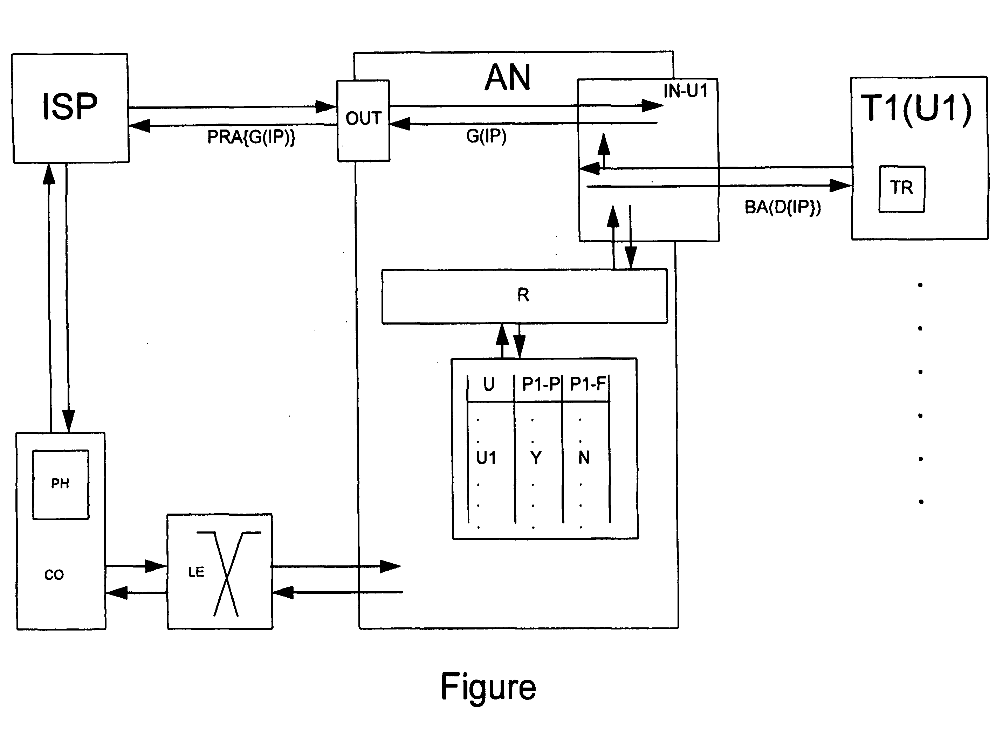

By this way, the internet data packets which are routed via the second link supporting a primary rate access transport service to the internet service provider are not necessarily routed directly to this internet service provider. A person skilled in the art knows that e.g. a router can be coupled between the access node and the desired internet service provider. XP004032486 deals with internal communications in a multiprocessor ISDN PXB providing different interfaces for ISDN connectivity (e.g. primary rate access ; page 392, column 1, lines 33-36 ; figures 1,3).

Furthermore to the above note, it is remarked that the path between an output of A and an input of B could be wired or could be wireless.

In this way, when the predefined transport service supported by the first link is an ISDN basic access service as described in the characteristic feature of claim 3, the first link is a telephone line. On the other hand, it has to be remarked that the predefined transport service is not limited to ISDN basic access services only, and that the first link is not limited to a telephone line either. Indeed, the aim is the availablity of a predefined channel used for signaling and also used for packet traffic like e.g. the 'D' channel of ISDN; and the slow associated control channel 'SACCH' i.e. a channel of Global System for Mobile Communication GSM which is used for the transport of signaling and which is also used for carrying data such as short messages. By this way, in the event of the 'SACCH' channel of GSM, the first link supporting the predefined transport service is a wireless link.

Another remark is that although the use of e.g. the 'D' channel in the event of ISDN following the method of the invention provides only a small available bandwidth for routing data packets between a terminal and an internet service provider, the method of the invention allows to upgrade at any moment the bandwidth of an internet session of a user by adding one or two 'B' channels to the connection via its normal ISDN calls on the 'B' channels. In this way, the use of the method of the invention is recommended for starting up an internet session and for maintaining the internet session as long as sufficient bandwidth is available and when more bandwidth is required one or two 'B' channels are added to the internet session.

A further feature of the present invention, described in claim 2, is that the method further includes the step of checking by the access node the value of a preconfigured user parameter which is set following the user's preferences. Indeed, by including this step the value of a preconfigured user parameter which is set following the preferences of the user, determines that the internet data packets are routed following the steps of the method of the invention c) and d) or not. It has to be remarked that the step of checking the user parameter not has to be executed just before an internet connection is set up between a terminal and an internet service provider. Indeed, this user parameter can be provided by the user to the operator in advance, whereby the user parameter is checked in advance and whereby e.g. the input user port of the access node being coupled to the terminal of the user, is preconfigured accordingly. This step is realized by the access node wherein routing function means are provided to retrieve the value of the preconfigured user parameter and to configure the input user port accordingly.

Another characteristic feature of the present invention is that in the event of ISDN, X.25 type packet routing and the frame relaying type packet routing are both supported. This is described in claim 4.

Since both types of packet routing can be supported, another characteristic feature of the present invention is that for both types of packet routing a user parameter can be defined : a preconfigured user parameter for X.25 type packet or a preconfigured user parameter for frame relaying type packet, respectively. This is described in the method of claim 5 and realized with the access node of claim 7.

The above mentioned and other objects and features of the invention will become more apparent and the invention itself will be best understood by referring to the following description of an embodiment taken in conjunction with the accompanying drawing which shows a block scheme of an embodiment of a communication network including an access node and a terminal which are realizing the method of the invention.

Referring to the figure the working of the terminal and access node will be explained by means of a functional description of the blocks shown therein. Based on this description, implementation of the functional blocks will be obvious to a person skilled in the art and will therefore not be described in detail. In addition, the principle working of the communication network regarding the invention will be described in further detail.

The communication network of the preferred embodiment includes : a plurality of terminals, an internet service provider ISP, an access node AN, a local exchange LE and a central office CO. In order not to overload the figure, only one terminal T1 associated to user U1 and a dotted line to indicate other terminals similar are shown.

The terminal T1 is coupled via a first link to the access node AN. The first link is an ordinary telephone subscriber line and supports a predefined transport service BA. The terminal T1 is a personal computer. Other kind of terminals are e.g. telephone unit, fax machine, answer machine, ... .

The local exchange LE and the central office CO are not relevant to the invention, but are included in this particular embodiment in order to explain better the difference between the prior art solution and the invention.

The local exchange LE is coupled to the access node AN and the central office CO is coupled between the local exchange LE and the internet service provider ISP.

The access node AN is following the invention coupled to the internet service provider ISP.

For this particular embodiment, it is decided to define the transport service BA as an integrated services digital network basic access service i.e. ISDN-BA service.

The method described in this embodiment routes internet data packets IP between the terminal T1 of the user U1 and the internet service provider ISP.

Following a possible prior art solution, the internet data packets IP are routed between the terminal T1 and the internet service provider ISP via the access node AN, the local exchange LE and the central office CO. The central office includes a packet handler PH which enables the central office CO to route the internet traffic, coming from the terminal T1, to the internet service provider ISP. For such a solution one or two 'B' channels (not shown) of the ISDN-BA service are usually used for inclusion of the internet data packets IP, whereby a digitized ISDN-BA information signal which includes two 'B' channels and one 'D' channel is routed by the access node AN via an V5.1 interface to the local exchange LE.

As explained already above, due to the long duration internet calls, the local exchange LE and the central office CO becomes congested whereby even usual telephone calls are not possible anymore.

In order to release the local exchange LE of the resource consuming internet calls the access node AN and the terminal T1, included in the communication network of this embodiment, are adapted as described in the following paragraphs.

The terminal T1 includes a transmitter TR adapted to transmit the data packets IP upon the user U1 its preferences via a predefined signaling-data channel of the predefined transport service BA. Since the predefined transport service is the ISDN-BA service, the predefined signaling-data channel is the 'D' channel of ISDN-BA.

This means that in the event when the user U1 prefers to use the 'D' channel of ISDN-BA in order to transmit its internet data packets IP, the transmitter TR includes the internet data packets IP in the 'D' channel following X.25 type packet routing or following frame relaying type packet routing or both.

Thus, the transmitter TR inserts the internet data packets IP in the 'D' channel of the ISDN-BA service supported by the first link between the terminal T1 and the access node AN. This is expressed in the figure by BA(D{IP}. Digitized information including e.g. the internet data packets IP of the 'D' channel is transmitted by the transmitter TR to the access node AN.

The access node AN includes an input user port IN-U1, an output port OUT, a router R and a memory (see functional block of the access node which includes a table).

It has to be explained that it is obvious to a person skilled in the art that such an access node includes more than one input user port and more than one output port. However, in order not to overload the figure, only the input user port IN-U1 which is coupled to the terminal T1 of the user U1 and the output port OUT which is coupled to the internet service provider ISP are shown in the figure.

The input user port IN-U1 is coupled to the terminal T1 and to the output port OUT. The output port OUT is coupled on its turn to the internet service provider ISP. The memory is coupled to the router R which on its turn is coupled to the input user port IN-U1.

The input user port IN-U1 receives the digitized information from the transmitter TR and is enabled to groom the internet data packets IP from the 'D' channel. This means that the internet data packets IP are separated from other information included in the 'D' channel e.g. signaling information, without changing its contents. The input user port IN-U1 generates in this way groomed internet data packets G(IP).

The groomed internet data packets G(IP) are multiplexed and are transferred via the output port OUT over a second link which supports a primary rate access transport service PRA{G(IP)} towards the internet service provider ISP.

In this particular embodiment a 2Mbit link is preferred for the second link, which supports a primary rate access transport service which offers thirty 64 kilobit per second 'B' channels and one 64 kilobit per second 'D' channel. It has to be remarked that the invention is not restricted to such kind of transport service. Indeed, a primary rate access may consist of e.g. 23B + D channels as in North America and some other countries.

The memory included in the access node AN includes a table which stores for each user U 1 its preferences regarding its requirement of the use of the primary rate access transport service directly from the access node AN towards the internet service provider ISP for the transmission of its data packets which are included in the 'D' channel. For each user a preconfigured user parameter for an X.25 type packet P1-P and a preconfigured user parameter for a frame relaying type packet P1-F is stored. This means that a user is able to express its preference for X.25 type packets included in its 'D' channel and for frame relaying type packets included in its 'D' channel and that this preference is stored in the table accordingly. For this particular embodiment it is preferred to enter a value Y (yes) in order to express the requirement as described above for the X.25 type packets; and to enter a value N (no) in order to refuse the service of the access node AN for frame relaying type packets. In this way, it is shown in the Figure that for user U1 the P1-P parameter is put positive with 'Y' and the P1-F parameter is put negative with 'N'.

The router R is included in the access node AN in order to retrieve the value of the P1-P and P1-F parameters for the input user port IN-U1 and to configure the input user port IN-U1 accordingly. This means that in the event of e.g. - a positive value Y for the parameter P1-P, the input user port IN-U1 is configured as such and grooms X.25 type packets from the 'D' channel; and
- a negative value N for the parameter P2-P, the input user port IN-U1 is configured as such and will not groom frame relay type packets from the 'D' channel, but sends the frame relay type packets on the V.51 interface.

It has to be understood that a user can provide its preferences to the operator by e.g. a written acknowledgment or by calling a predefined number whereby its preferences are noticed and stored. In the same way the user its preferences can also be changed. A further remark is that although in this preferred embodiment the possibility of a choice is left open due to the presence of the router and the table included in the memory, the present invention is not reduced to an implementation as such. Indeed, small modifications, evident to a person skilled in the art, may be applied to this embodiment to adapt it to configure the input user port IN-U1 permanently in one or another way.

It has to be explained that a choice is made to configure the input user port IN-U1 for both types of packet routing following the preferences of the user U1 : use of the primary rate access link or not for X.25; and use of the primary rate access link or not for frame relaying. This choice is stored in the table shown in the Figure. However, both kinds of packet routing, X.25 and frame relaying, have their own way of routing data packets from the user side to the network side and from the network side to the user side. Since the detailed description of how the above is implemented goes beyond the scope of the invention, only the global structure will be given in the following paragraphs.

Two extra tables (not shown in the figure) are defined and implemented in the access node AN. Further in this paragraph references are made in order to explain these routing methods which are also not shown in the Figure. It has to be explained that one input user port IN-U1 might be coupled to more than one terminal, and that one terminal might support more than one logical channel. For example terminal T1 with terminal equipment identification TEI1 supports a first logical channel with logical channel number LCN-IN1 and a second logical channel with logical channel number LCN-IN2. These two logical channels are for example both occupied in an internet session via X.25 packets. A remark has to be made here to make clear that each applications, one with e.g. LCN-IN1 and the other with e.g. LCN-IN2 might have access to one and the same internet service provider or to a different internet service providers.

In the event of X.25 a first extra table is kept in the access node AN to store for each input user port e.g. IN-U1 all its unambiguous couples of terminal equipment identification with logical channel number e.g. for IN-U1 (TEI1, LCN-IN1), (TEI1, LCN-IN2), ... . For two different terminals, the same logical channel number might be used since only the couple (TEI, LCN-IN) must be unique. For the traffic going from the user side to the network side, next to these couples, the identification of the primary rate access line i.e. 2 Mbit link - ID, the identification of the assigned primary rate time slot i.e. TS-ID and a unique logical channel out number i.e. LCN-OUT is stored. The internet packet is transferred together with the LCN-OUT in the time slot following its TS-ID of the link following the 2 Mbit link-ID to the internet service provider ISP. This LCN-OUT number is used by the internet service provider ISP to send traffic, in the opposite direction, towards a predefined terminal. So, for the access node AN, upon reception of an internet data packet IP together with its LCN-OUT number, the first extra table is checked, and the access node AN knows to which input user port IN-U1 the internet packet IP must be routed in order to reach the exact logical channel LCN-IN at the exact terminal T1.

In the event of frame relaying a second extra table is kept in the access node AN to store for each input user port e.g. IN-U1 an unambiguous identification for each used logical channel for all its terminals : Data Link Connection Identifier number DLCI-IN. In this case, each used DLCI-IN for one and the same user input port must be unique, since no terminal equipment identification is kept. For the traffic going from the user side to the network side next to each DLCI-IN number the identification of the primary rate access line i.e. 2 Mbit link - ID, the identification of the assigned primary rate time slot i.e. TS-ID and a unique Connection Identifier out number i.e. DLCI-OUT is stored. The internet packet is transferred together with its DLCI-OUT number in the timeslot following its TS-ID of the link following the 2 Mbit link - ID to the internet service provider. This DLCI-OUT number is used by the internet service provider ISP to send traffic, in the opposite direction, towards a predefined terminal. So, for the access node AN, upon reception of an internet data packet IP together with its DLCI-OUT number, the second extra table is checked, and the access node AN knows to which input user port IN-U1 the internet packet IP must be routed in order to reach the exact logical channel DLCI-IN.

In the following paragraph, the principle working of the communication network as described above and following the preferences stored in the table as shown in the Figure, will be explained in further detail.

The user U1 starts an internet connection on its personal computer T1(U1). Since its internet connection at start up does not require many bandwidth, the user U1 prefers to use its 'D' channel from its ISDN-BA line, lets assume, the X.25 type of packets for the transportation of its internet data packets IP to internet. The user U1 already expressed in advance its preferences regarding the use of the 2Mbit link from the access node AN to the internet service provider ISP. Indeed, the user knows that in the access node AN, its preconfigured user parameter for an X.25 type of packet P1-P is positive programmed with Y and that its preconfigured user parameter for frame relaying type packets P1-F is negative programmed. So, via the software packet installed on its personal computer T1, the user U1 makes the choice to include its internet data packets in the X.25 type of packets of its 'D' channel. The transmitter TR included in its personal computer T1 includes the internet data packets IP accordingly and transmits a digitized ISDN-BA information signal towards the access node AN. The input user port IN-U1 which is preconfigurred in advance following the preferences of the user U1, via the router R and the memory table grooms the internet data packets IP from the X.25 type of packets included in the 'D' channel. These internet data packets IP are routed to the output port OUT which provides access via the 2Mbit link towards the internet service provider ISP. The appropriate routing information is also stored in the first extra table from the access node AN in order to be able to route internet data packets going to and coming from the internet service provider ISP.

It has to be remarked that the information included in the frame relaying type of packets from the 'D' channel of the digitized information signal and the information included in the two 'B' channels of the digitized information signal are routed, following the normal ISDN-BA way, towards the local exchange LE via the V 5.1 interface.

In the event when the internet session becomes more intensive between the terminal T1 and the internet service provider ISP, the user U1 decides to upgrade its available bandwidth by adding one or two 'B' channels to the internet session. It has to be remarked here that a software packet of Microsoft is used on the personal computer T1 in order to implement the above option. This software packet "ISDN Accelerator pack 1.1" provides the possibility to a user to add dynamically bandwidth to its internet session. Indeed, the user U 1 enters the preference of two extra 'B' channels on its terminal T1 whereby the transmitter TR includes the internet data packets IP not only in the 'D' channel following X.25 type of packets, but also in two 'B' channels of the ISDN-BA transport service. The internet data packets which are included in the 'B' channels are still routed via the access node AN and the local exchange LE towards the internet service provider ISP, but together with the internet data packets which are routed directly via the 2Mbit link towards the internet service provider, the user U1 has more bandwidth available.

Furthermore it should be noted that although in the above described communication network, the X.25 type packets and the frame relaying type packets are routed, if preferred by the user U1, on one and the same 2Mbit link, the application of the present invention is not reduced to only one 2Mbit link. Indeed, small modifications, evident to a person skilled in the art, may be applied to the above described embodiment to adapt it to be integrated in other kind of communication networks wherein more than one link available is to transfer the groomed internet packets.

As already mentioned in the introductory part of this application, the application of the present invention is not restricted to a direct second link PRA{G(IP)} from the access node AN to the internet service provider ISP. Small modifications, evident to a person skilled in the art, may be applied to the above described embodiment to adapt it to be integrated in a communication network wherein the access node AN is coupled to the internet service provider ISP via e.g. an X.25 packet switching node or via packet handler or via a remote access node.

It has to be remarked that although in the above described communication network, an ISDN-BA service is preferred to define the transport service supported by the first link between the terminal T1 and the access node AN, the application of the present invention is not reduced to the field of ISDN. Small modifications, evident to a person skilled in the art, may be applied to the above described embodiment to adapt it to be integrated with other kinds of transport services wherein a predefined channel used for signaling and data packet traffic is available. For instance, as already above mentioned, the slow associated control channel 'SAACCH' being a channel of Global System for Mobile Communication GSM which is used for the transport of signaling and data such as short messages.

While the principles of the invention have been described above in connection with specific apparatus, it is to be clearly understood that this description is made only by way of example and not as a limitation on the scope of the invention, as defined in the appended claims.

## Claims

1. Method to route internet data packets (IP) between an internet service provider (ISP) and a terminal (T1) of a user (U1) via an access node (AN), said terminal (T1) being coupled to said access node (AN) via a first link supporting a predefined transport service (BA), **characterized in that** said method includes the steps of :
a) transferring by said terminal (T1) to said access node (AN) said internet data packets (IP) via a predefined signaling-data channel (D) of said predefined transport service (BA);
b) retrieving by a routing function means (R) of said access node (AN-) a value of a pre-configured user parameter (P1) which is set following said user's (U1) preferences and configuring an input user port (IN-U1) of said access node (AN) accordingly; and
c) upon receipt of said internet data packets (IP) via said input user port (IN-U1) of said access node (AN) grooming said internet data packets (IP) from said predefined signaling-data channel (D); and
d) transferring by said access node (AN) said internet data packets (IP) via a second link supporting a primary rate access transport service (PRA) to said internet service provider (ISP).

2. The method to route internet data packets (IP) according to claim 1, **characterized in that** said method further includes the step of checking by said access node (AN) the value of a preconfigured user parameter (P1) which is set following said user's (U1) preferences in order to decide execution of said step c) and said step d).

3. The method to route internet data packets (IP) according to claim 1, **characterized in that** said predefined transport service (BA) is an integrated services digital network basic access service and that said predefined signaling-data channel (D) is the D channel of said predefined transport service (BA).

4. The method to route internet data packets (IP) according to claim 3, **characterized in that** any of said step a) and said step d) is realized following X.25 type packet routing or following frame relaying type packet routing.

5. The method to route internet data packets (IP) according to claim 2 and claim 4, **characterized in that** said preconfigured user parameter (P1) is a preconfigured user parameter for an X.25 type packet (P1-P) or for a frame relaying type packet (P1-F), respectively.

6. Access node (AN) for inclusion in a communication network and for coupling via a first link supporting a predefined transport service (BA) to a terminal (T1) of a user (U1), internet data packets (IP) being routed between said terminal (T1) and an internet service provider (ISP), **characterized in that** said access node (AN) includes :
- routing function means (R) coupled to an input user port (IN-U1) of said access node (AN) to retrieve a value of a preconfigured user parameter (P1) which is set following said user's (U1) preferences and to configure said input user port (IN-U1) accordingly; and - said input user port (IN-U1) coupled to said terminal (T1) to groom, according to its configuration, said internet data packets (IP) from a predefined signaling-data channel (D) of said predefined transport service (BA) via which said internet data packets (IP) are transmitted by said terminal (T1) to said input user port (IN-U1) thereby generating groomed internet data packets (G(IP)); and
- an output (OUT) coupled to said input user port (IN-U1) to transfer said groomed internet data packets (G(IP)) via a second link supporting a primary rate access transport service (PRA) to said internet service provider (ISP).

7. The access node (AN) according to claim 6, **characterized in that** said preconfigured user parameter (P1) is a preconfigured user parameter for an X.25 type packet (P1-P) or for a frame relaying type packet (P1-F).

8. Communication network **characterized in that** said communication network includes at least one access node (AN) as described in claim 6.

## Patentansprüche

1. Verfahren zur Leitweglenkung von Internetdatenpaketen (IP) zwischen einem Internet-Dienstanbieter (ISP) und einem Endgerät (T1) eines Benutzers (U1) über einen Zugriffsknoten (AN), wobei das Endgerät (T1) mit dem Zugriffsknoten (AN) über eine erste Verbindung gekoppelt ist, die einen vordefinierten Übertragungsdienst (BA) unterstützt, **dadurch gekennzeichnet, dass** das Verfahren folgende Schritte umfasst:
a) Übertragung der Internetdatenpakete (IP) durch das Endgerät (T1) zum Zugriffsknoten (AN) über einen vordefinierten Signalisierungs-Daten-Kanal (D) des vordefinierten Übertragungsdienstes (BA);
b) Durch ein Leitweglenkungs-Funktions-Mittel (R) des Zugriffsknotens (AN) Abruf eines Wertes eines vordefinierten Benutzerparameters (P1), der entsprechend den Präferenzen des Benutzers (U1) eingestellt wird und entsprechende Konfiguration eines Benutzer-Eingangsanschlusses (IN-U1) des Zugriffsknotens (AN); und
c) Bei Empfang des Internetdatenpaketes (IP) über den Benutzer-Eingangsanschluss (IN-U1) des Zugriffsknotens (AN) Vorbereitung der Internetdatenpakete (IP) von dem vordefinierten Signalisierungs-Daten-Kanal (D); und
d) Übertragung der Internetdatenpakete (IP) durch den Zugriffsknoten (AN) über eine zweite Verbindung, die einen Primärmultiplex-Übertragungsdienst (PRA) zum Internet-Dienstanbieter (ISP) unterstützt.

2. Das Verfahren zur Leitweglenkung von Internetdatenpaketen (IP) gemäß Anspruch 1, **dadurch gekennzeichnet, dass** das Verfahren weiterhin den Schritt umfasst, dass der Zugriffsknoten (AN) den Wert eines vorkonfigurierten Benutzer-Parameters (P1) überprüft, der entsprechend der Präferenzen des Benutzers (U1) eingestellt wird, um über die Ausführung des Schrittes c) und des Schrittes d) zu entscheiden.

3. Das Verfahren zur Leitweglenkung von Internetdatenpaketen (IP) gemäß Anspruch 1, **dadurch gekennzeichnet, dass** der vordefinierte Übertragungsdienst (BA) ein Dienst des Basisanschlusses des diensteintegrierenden digitalen Netzes ist und dass der vordefinierte Signalisierungs-Daten-Kanal (D) der D-Kanal des vordefinierten Übertragungsdienstes (BA) ist.

4. Das Verfahren zur Leitweglenkung von Internetdatenpaketen (IP) gemäß Anspruch 3, **dadurch gekennzeichnet, dass** jeder der Schritte a) und d) entsprechend der X.25-Paket-Leitweglenkung oder der Frame-Relay-Paket-Leitweglenkung realisiert wird.

5. Das Verfahren zur Leitweglenkung von Internetdatenpaketen (IP) gemäß Anspruch 2 und Anspruch 4, **dadurch gekennzeichnet, dass** der vorkonfigurierte Benutzer-Parameter (P1) ein vorkonfigurierter Benutzer-Parameter für ein Paket vom X.25-Typ (P1-P) bzw. für ein Paket vom Frame-Relay-Typ (P1-F) ist.

6. Zugriffsknoten (AN) zur Aufnahme in ein Kommunikationsnetz und zur Kopplung über eine erste Verbindung, die einen ersten vordefinierten Übertragungsdienst (BA) unterstützt mit einem Endgerät (T1) eines Benutzers (U1), wobei die Leitweglenkung von Internetdatenpaketen (IP) zwischen dem Endgerät (T1) und einem Internet-Dienstanbieter (ISP) durchgeführt wird, **dadurch gekennzeichnet, dass** der Zugriffsknoten (AN) Folgendes umfasst:
- Leitweglenkungs-Funktions-Mittel (R), die mit einem Benutzer-Eingangsanschluss (IN-U1) des Zugriffsknotens (AN) gekoppelt sind, um einen Wert eines vorkonfigurierten Benutzer-Parameters (P1) abzurufen, der entsprechend der Präferenzen des Benutzers (U1) eingestellt wird und um den Benutzer-Eingangsanschluss (IN-U1) entsprechend zu konfigurieren; und
- Den Benutzer-Eingangsanschluss (IN-U1), der mit dem Endgerät (T1) gekoppelt ist, um entsprechend seiner Konfiguration die Internetdatenpakete (IP) von einem vordefinierten Signalisierungs-Daten-Kanal (D) des vordefinierten Übertragungsdienstes (BA) vorzubereiten, über den die Internetdatenpakete (IP) von dem Endgerät (T1) zu dem Benutzer-Eingangsanschluss (IN-U1) gesendet werden, wodurch vorbereitete Internetdatenpakete (G(IP)) erzeugt werden; und
- Einen Ausgang (OUT), der mit dem Benutzer-Eingangsanschluss (IN-U1) gekoppelt ist, um die vorbereiteten Internetdatenpakete (G(IP)) über eine zweite Verbindung zu übertragen, die einen Primärmultiplex-Übertragungsdienst (PRA) zum Internet-Dienstanbieter (ISP) unterstützt.

7. Der Zugriffsknoten (AN) gemäß Anspruch 6, **dadurch gekennzeichnet, dass** der vorkonfigurierte Benutzer-Parameter (P1) ein vorkonfigurierter Benutzer-Parameter für ein Paket vom X.25-Typ (P1-P) oder für ein Paket vom Frame-Relay-Typ (P1-F) ist.

8. Kommunikationsnetz, **dadurch gekennzeichnet, dass** das Kommunikationsnetz mindestens einen Zugriffsknoten (AN) enthält, wie in Anspruch 6 beschrieben.

## Revendications

1. Procédé de routage de paquets de données Internet (IP) entre un fournisseur de services Internet (ISP) et un terminal (T1) d'un utilisateur (U1) via un noeud d'accès (AN), ledit terminal (T1) étant couplé audit noeud d'accès (AN) via une première liaison prenant en charge un service de transport prédéfini (BA), **caractérisé en ce que** ledit procédé comprend les étapes consistant à :
a) transférer au moyen dudit terminal (T1) audit noeud d'accès (AN) lesdits paquets de données Internet (IP) via un canal de signalisation prédéfini (D) dudit service de transport prédéfini (BA) ;
b) récupérer par des moyens de fonction de routage (R) dudit noeud d'accès (AN) une valeur d'un paramètre utilisateur préconfiguré (P1) qui est défini selon les préférences dudit utilisateur (U1) et configurer un port utilisateur d'entrée (IN-U1) dudit noeud d'accès (AN) en conséquence ; et
c) lors de la réception desdits paquets de données Internet (IP) via ledit port utilisateur d'entrée (IN-U1) dudit noeud d'accès AN grouper lesdits paquets de données Internet (IP) en provenance dudit canal de signalisation prédéfini (D) ; et
d) transférer au moyen dudit noeud d'accès (AN) lesdits paquets de données Internet (IP) via une seconde liaison prenant en charge un service de transport à accès primaire (PRA) audit fournisseur de services Internet (ISP).

2. Procédé de routage de paquets de données Internet (IP) selon la revendication 1, **caractérisé en ce que** ledit procédé comprend en outre l'étape consistant à vérifier au moyen dudit noeud d'accès (AN) la valeur d'un paramètre utilisateur préconfiguré (P1) qui est défini selon les préférences dudit utilisateur (U1) afin de décider de l'exécution de ladite étape c) et de ladite étape d).

3. Procédé de routage de paquets de données Internet (IP) selon la revendication 1, **caractérisé en ce que** ledit service de transport prédéfini (BA) est un service d'accès de base à un réseau numérique à intégration de services et **en ce que** ledit canal de signalisation prédéfini (D) est le canal D dudit service de transport prédéfini (BA).

4. Procédé de routage de paquets de données Internet (IP) selon la revendication 3, **caractérisé en ce que** l'une quelconque de ladite étape a) et de ladite étape d) est réalisée selon le routage de paquets de type X.25 ou selon le routage de paquets de type relais de trames.

5. Procédé de routage de paquets de données Internet (IP) selon la revendication 2 et la revendication 4, **caractérisé en ce que** le paramètre utilisateur préconfiguré (P1) est un paramètre utilisateur préconfiguré respectivement pour un paquet de type X.25 (P1-P) ou pour un paquet de type relais de trames (P1-F).

6. Noeud d'accès (AN) prévu pour être compris dans un réseau de communication et couplé via une première liaison prenant en charge un service de transport prédéfini (BA) à un terminal (T1) d'un utilisateur (U1), les paquets de données Internet (IP) étant routés entre ledit terminal (T1) et un fournisseur de services Internet (ISP), **caractérisé en ce que** ledit noeud d'accès (AN) comprend :
- des moyens de fonction de routage (R) couplés à un port utilisateur d'entrée (IN-U1) dudit noeud d'accès (AN) pour récupérer une valeur d'un paramètre utilisateur préconfiguré (P1) qui est défini selon les préférences dudit utilisateur (U1) et pour configurer ledit port utilisateur d'entrée (IN-U1) en conséquence ; et ledit port utilisateur d'entrée (IN-U1) étant couplé audit terminal (T1) pour grouper, selon la configuration de celui-ci, lesdits paquets de données Internet (IP) provenant d'un canal de signalisation prédéfini (D) dudit service de transport prédéfini (BA) via lequel lesdits paquets de données Internet (IP) sont transmis par ledit terminal (T1) audit port utilisateur d'entrée (IN-U1) lequel génère ainsi des paquets de données Internet groupés G(IP) ; et
- une sortie (OUT) couplée audit port utilisateur d'entrée (IN-U1) pour transférer lesdits paquets de données Internet groupés G(IP) via une seconde liaison prenant en charge un service de transport à accès primaire (PRA) audit fournisseur de services Internet (ISP).

7. Noeud d'accès (AN) selon la revendication 6, **caractérisé en ce que** ledit paramètre utilisateur préconfiguré (P1) est un paramètre utilisateur préconfiguré (P1) pour un paquet de type X.25 (P1-P) ou pour un paquet de type relais de trames (P1-F).

8. Réseau de communication **caractérisé en ce que** ledit réseau de communication comprend au moins un noeud d'accès (AN) décrit dans la revendication 6.
